# EUROPÄISCHE PATENTSCHRIFT

(11) **EP 4 603 235 B1**
(45) Veröffentlichungstag und Bekanntmachung des Hinweises auf die Patenterteilung: **08.07.2026**
(21) Anmeldenummer: 24219830.7
(22) Anmeldetag: 13.12.2024
(51) Int. Cl.: B25J 9/16, B25J 13/00, B25J 19/02

(54) **VERFAHREN ZUM BETREIBEN EINES ROBOTERS**
METHOD FOR OPERATING A ROBOT
PROCÉDÉ DE FONCTIONNEMENT D'UN ROBOT

(30) Priorität: 15.02.2024 DE 102024104183
(43) Veröffentlichungstag der Anmeldung: 20.08.2025
(73) Patentinhaber: SICK AG, 79183 Waldkirch (DE)
(72) Erfinder: Hofmann, Christoph, 79183 Waldkirch (DE); Gebauer, Jens, 79183 Waldkirch (DE)
(74) Vertreter: Manitz Finsterwald Patent- und Rechtsanwaltspartnerschaft mbB

(56) Entgegenhaltungen:
- WO-A1-2016/172718
- DE-A1- 10 351 669
- US-A1- 2022 147 026
- MICHAEL WALKER ET AL: "Virtual, Augmented, and Mixed Reality for Human-Robot Interaction: A Survey and Virtual Design Element Taxonomy", ARXIV.ORG, CORNELL UNIVERSITY LIBRARY, 201 OLIN LIBRARY CORNELL UNIVERSITY ITHACA, NY 14853, 23 February 2022 (2022-02-23), XP091163850

## Beschreibung

Die vorliegende Erfindung betrifft ein Verfahren zum Betreiben eines Roboters, wobei der Roboter mittels eines mit dem Roboter mitbewegten Umgebungssensors die Umgebung des Roboters erfasst.

Bei Robotern, beispielsweise bei Gelenkarmrobotern und dergleichen wird häufig ein mitbewegter Umgebungssensor bzw. Distanzsensor eingesetzt, um die Umgebung des Roboters zu erfassen und auf diese Weise z.B. Kollisionen mit Objekten in der Umgebung zu vermeiden. Zu diesem Zweck kann der Roboter beispielsweise angehalten werden, wenn ein Objekt einen Mindestabstand zu dem Roboter unterschreitet.

Überdies ist es möglich, die Bewegungen des Roboters, beispielsweise vorab, in einem Modell zu simulieren, um zu testen, ob die geplanten Bewegungen des Roboters ohne Zusammenstoß mit Hindernissen, Wänden und dergleichen möglich sind.

Die so simulierten Bewegungen des Roboters können dann bei erfolgreicher Simulation auf den realen Roboter übertragen werden. Stellt es sich nun in der Realität aber heraus, dass die Roboterbewegungen doch nicht ohne Kollision oder andere Probleme ausgeführt werden können, ist es häufig schwierig und zeitaufwendig, den Fehler zu finden, welcher letztlich zu der problematischen Roboterbewegung geführt hat.

DE 103 51 669 A1 betrifft eine Vorrichtung zum Steuern eines Industrieroboters relativ zu einem Objekt.

US 2022/147026 A1 beschreibt eine Auto-Kalibrierung einer Roboterzelle, die für Fertigung oder Montage genutzt wird.

WO 2016/172718 A1 beschreibt ein ferngesteuertes Robotersystem, das eine Anzeigevorrichtung aufweist.

Der Artikel Walker et al., "Virtual, Augmented, and Mixed Reality for Human-Robot Interaction: A Survey and Virtual Design Element Taxonomy", ARXIV.ORG, COR-NELL UNIVERSITY LIBRARY, NY 14853, 23. Februar 2022, beschreibt einen neuen taxonomischen Rahmen für verschiedene Arten von virtueller, erweiterter und gemischter Realität für die Mensch-Roboter-Interaktion.

Es ist daher die der Erfindung zugrundeliegende Aufgabe, ein Verfahren anzugeben, welches das Betreiben eines Roboters vereinfacht und insbesondere die Fehlersuche bei der Verwendung einer Simulation des Roboters verbessert.

Diese Aufgabe wird durch ein Verfahren gemäß Anspruch 1 gelöst.

Bei dem erfindungsgemäßen Verfahren zum Betreiben eines Roboters erfasst der Roboter mittels eines mit dem Roboter mitbewegten Umgebungssensors die Umgebung, insbesondere die direkte Umgebung des Roboters. Mittels dem Umgebungssensor werden während einer realen Bewegung des Roboters reale Messwerte erzeugt. Überdies wird ein Umgebungsmodell angelegt, welches auf der realen Umgebung des Roboters basiert. Dabei werden die realen Bewegungen des Roboters in dem Bewegungsmodell simuliert, um simulierte Messwerte (anders ausgedrückt: erwartete Messwerte) des Umgebungssensors in dem Umgebungsmodell zu erzeugen. Insbesondere können die simulierten Messwerte in dem Umgebungsmodell direkt erzeugt werden und/oder aus dem Umgebungsmodell abgeleitet werden. Anschließend werden die realen Messwerte des Umgebungssensors mit den simulierten Messwerten aus dem Umgebungsmodell verglichen, wobei bei dem Vergleichen erkannte Unterschiede mittels einer Anzeigeeinrichtung für den Benutzer visualisiert werden, indem der Ort des Unterschieds angezeigt wird. Bei dem Vergleichen erkannte Übereinstimmungen werden mittels einer Anzeigeeinrichtung für den Benutzer visualisiert, indem der Ort der Übereinstimmung markiert und angezeigt wird. Die erkannten Unterschiede werden jeweils für einen Oberflächenbereich angezeigt. Die erkannten Übereinstimmungen werden jeweils für einen Oberflächenbereich angezeigt. Auf eine erkannte Übereinstimmung hin kann das Umgebungsmodell bereichsweise als verifiziert bzw. validiert angesehen werden.

Erfindungsgemäß kann also dem Benutzer dargestellt werden, wo ein Unterschied zwischen den realen Messwerten und den simulierten Messwerten erkannt wurde, indem der Ort dargestellt wird. Beispielsweise können Unterschiede in gemessenen Abstands- bzw. Distanzwerten so dargestellt werden, dass dem Benutzer sofort ersichtlich ist, dass die Distanz z.B. zu einer Fläche anders gemessen wurde als im Umgebungsmodell erwartet.

Für den Benutzer erleichtert dies die Fehlersuche, da dann ersichtlich sein kann, für welche Fläche gegebenenfalls falsche Informationen in dem Umgebungsmodell vorliegen oder dass die Fläche in der Realität beispielsweise bewegt oder verändert wurde. Die vorstehenden Ausführungen sind dabei lediglich beispielhaft zu verstehen, es sind auch andere Visualisierungsmöglichkeiten oder Fehlerfälle denkbar, beispielsweise unterschiedliches Emissionsverhalten in der Realität und im Umgebungsmodell oder unterschiedliche Anzeigemethoden.

Ganz allgemein ermöglicht es die Erfindung, den Betrieb eines Roboters zu vereinfachen.

Nachfolgend werden noch weitere Details der Erfindung erläutert.

Der Umgebungssensor kann an dem Roboter befestigt sein, um dementsprechend mit dem Roboter mitbewegt zu werden. Beispielsweise kann der Umgebungssensor an einem Endeffektor des Roboters montiert sein. In dem Umgebungsmodell kann insbesondere die Bewegung des Roboters und/oder des Umgebungssensors simuliert werden, so dass beispielsweise die Pose des Roboters und/oder des Umgebungssensors zu einem jeweiligen Zeitpunkt aus dem Umgebungsmodell bekannt ist. Dabei meint die Pose insbesondere die Position und/oder Orientierung des Roboters in z.B. bis zu sechs Freiheitsgraden. Bei einem mehrgliedrigen Roboter kann es noch mehr Freiheitsgrade geben, in diesem Fall kann die Pose z.B. auf einen Endeffektor bezogen sein. Aus der Pose des Umgebungssensors können dann in dem Umgebungsmodell simulierte Messdaten für den Umgebungssensor erzeugt werden, da beispielsweise bekannt sein kann, welchen Abstand der Umgebungssensor in der Simulation zu einem Objekt in der (simulierten) Umgebung besitzt.

In dem Umgebungsmodell kann die Umgebung des Roboters hinterlegt sein, also beispielsweise die Wände, der Boden und die Decke, in der Umgebung vorhandene Objekte, wie Tische, Maschinen und dergleichen. In dem Umgebungsmodell kann auch der Roboter nachgebildet sein, so dass Bewegungen des Roboters in dem Umgebungsmodell nachgebildet werden können. Die Bewegungen des Roboters können beispielsweise aus einem Ablaufprogramm oder einer Ablaufsteuerung des Roboters übernommen werden.

Das Umgebungsmodell kann beispielsweise basierend auf Messdaten erzeugt werden. So kann der Roboter und dessen Umgebung durch einen Scanner und/oder eine Kamera aufgenommen werden, um das Umgebungsmodell zu erzeugen. Alternativ oder zusätzlich können auch z.B. CAD-Daten des Roboters und/oder der Umgebung in das Umgebungsmodell einfließen. Weiter alternativ oder zusätzlich können auch Daten aus einem sogenannten industriellen Metaversum (auch "Omniverse" genannt) verwendet werden. Insbesondere können z.B. Daten einer "Universal Scene Description (OpenUSD)" oder ähnlicher Datenformate in das Umgebungsmodell einfließen.

Die simulierten Messdaten können dann mit realen Messdaten (also mit vom realen Umgebungssensor tatsächlich erzeugten Messdaten) verglichen werden, um gegebenenfalls Abweichungen festzustellen.

Insbesondere kann dann von einem erkannten Unterschied gesprochen werden, wenn die realen Messwerte und die simulierten Messwerte um zumindest einen vorgegebenen Schwellenwert voneinander abweichen.

Bei dem Vergleich zwischen den simulierten und den realen Messdaten können jeweils Messdaten für dieselbe Pose und/oder denselben Zeitpunkt miteinander verglichen werden. Werden Unterschiede zwischen den realen und den simulierten Messdaten festgestellt, so werden diese visualisiert. Ebenfalls ist es möglich, dass visualisiert wird, wenn keine Unterschiede festgestellt werden. Werden keine Unterschiede festgestellt, kann das Umgebungsmodell insbesondere bereichsweise als verifiziert bzw. validiert angesehen werden.

Die Visualisierung der Unterschiede kann dabei "live" erfolgen, d.h. direkt nach Erfassung der realen Messwerte. Alternativ ist es auch möglich, die Visualisierung verzögert darzustellen, beispielsweise nach einem vollständigen Durchlauf der Bewegungen des Roboters.

Die Visualisierung erfolgt mittels der Anzeigeeinrichtung, welche ein einfacher Bildschirm sein kann, auf welchem der Ort des Unterschieds angezeigt wird. Ebenfalls ist aber beispielsweise eine Darstellung mittels Augmented Reality (AR) möglich, wie später noch genauer ausgeführt wird. Ebenfalls wäre es beispielsweise möglich, die Visualisierung mittels Lichtsignalen durchzuführen, indem beispielsweise ein Bereich des realen Roboters und/oder der Umgebung heller oder mit einer vorgegebenen Farbe beleuchtet wird.

Weiterbildungen der Erfindung sind der Beschreibung, den Figuren sowie den Unteransprüchen zu entnehmen.

Gemäß einer ersten Ausführungsform ist die Anzeigeeinrichtung mobil und relativ zu dem Roboter bewegbar. Bei der Anzeigeeinrichtung kann es sich dementsprechend z.B. um ein Handy, ein Tablet, eine Datenbrille und dergleichen handeln. Eine mobile Anzeigeeinrichtung besitzt den Vorteil, dass die Anzeigeeinrichtung vor Ort z.B. beim Einrichten, Testen und/oder Programmieren des Roboters verwendet werden kann. Die Anzeigeeinrichtung kann beispielsweise über Funk, insbesondere WLAN, die Daten zu den Unterschieden und/oder die realen Messdaten des Umgebungssensors erhalten. Insbesondere kann auch das Umgebungsmodell auf der Anzeigeeinrichtung ausgeführt werden. In diesem Fall benötigt die Anzeigeeinrichtung dann lediglich die Bewegungsdaten des Roboters, also beispielsweise die aktuelle Pose.

Auf der Anzeigeeinrichtung kann insbesondere eine Ansicht des Roboters und/oder der Umgebung dargestellt sein. Die Ansicht kann insbesondere auch rein schematisch oder auf andere Art und Weise erfolgen. Das Anzeigen des Unterschieds kann in der Anzeige dann beispielsweise durch Farben oder Muster erfolgen, wie später noch genauer ausgeführt wird.

Gemäß einer weiteren Ausführungsform ist die Anzeigeeinrichtung eine Mixed-Reality-Anzeige oder eine Augmented-Reality-Anzeige, beispielsweise eine Augmented-Reality-Brille. Die Anzeigeeinrichtung kann dem Benutzer also Informationen in sein Sichtfeld projizieren und/oder die Informationen z.B. einem Kamerabild überlagern. Bei den Informationen kann es sich insbesondere um die Visualisierung des Orts des Unterschieds handeln.

Zu diesem Zweck kann die Anzeigeeinrichtung bevorzugt eine Kamera umfassen, um den Roboter und dessen Umgebung zu erfassen. Nachdem die Kamera den Roboter und die Umgebung erfasst hat, kann die Anzeigeeinrichtung dann die erkannten Unterschiede und den Ort des zumindest einen Unterschieds einblenden bzw. projizieren. Fehler, Abweichungen und dergleichen im Umgebungsmodell oder Veränderungen in der Realität sind dann für den Benutzer sofort erkennbar.

Der Benutzer kann beispielsweise ein Tablet mit einer Kamera verwenden, wobei der Benutzer die Kamera dann auf den Roboter und dessen Umgebung richtet. Auf einen Bildschirm des Tablets kann dann das Kamerabild zusammen mit einer überlagerten Visualisierung des Orts des Unterschieds angezeigt werden.

In ähnlicher Weise kann eine Augmented-Reality-Brille ebenfalls über eine Kamera verfügen, um zu erkennen, an welcher Position in das Sichtfeld die Informationen über den Ort des Unterschieds für den Benutzer angezeigt bzw. eingeblendet werden sollen. Bei der Verwendung einer Augmented-Reality-Brille besteht der Vorteil, dass der Benutzer seine Hände für die Arbeit mit dem Roboter zur Verfügung hat.

Bei der Anzeigeeinrichtung kann es sich auch z.B. um eine Microsoft Holo Lens, um eine Google Glass (beides Augmented-Reality-Brillen), eine Apple Vision Pro und dergleichen handeln. Hierbei kann eine Einbindung in das Verfahren auf einfache Weise erfolgen, da sowohl von Microsoft, als auch von Google und Apple jeweils sogenannte AR-Kits zur Verfügung gestellt werden, die die Anzeige des Orts des Unterschieds auf einfache Weise ermöglichen. Als Alternative kann beispielsweise die AR-Plattform von Vuforia eingesetzt werden.

Gemäß einer weiteren Ausführungsform wird eine (reale) Positionsmarke erfasst, beispielsweise ein maschinenlesbarer Code, insbesondere ein QR-Code (Quick-Response-Code), wobei die Positionsmarke mit einer von der Anzeigeeinrichtung umfassten Kamera erfasst wird. Die Position der Positionsmarke kann in dem Umgebungsmodell hinterlegt sein. Durch die Erfassung der Positionsmarke wird insbesondere die Position im Raum der Anzeigeeinrichtung ermittelt, so dass die Visualisierung des Orts des Unterschieds an der korrekten Position erfolgen kann. Zu diesem Zweck kann der Benutzer z.B. eine Kamera auf die Positionsmarke richten oder sich mit einer Augmented-Reality-Brille der Positionsmarke nähern. Nach Erfassen der Positionsmarke können dann Schwenkbewegungen oder lineare Bewegungen der Anzeigeeinrichtung z.B. durch visuelle Odometrie erkannt werden. Alternativ ist eine Erkennung der Schwenk- und linearen Bewegungen auch z.B. durch Beschleunigungssensoren und/oder Gyroskope möglich.

Auf diese Weise wird es gestattet, dass der Ort des Unterschieds auch dann an der korrekten Position angezeigt wird, wenn die Anzeigeeinrichtung bewegt wird.

Gemäß einer weiteren Ausführungsform ist der Umgebungssensor ein Abstandssensor, welcher bevorzugt mehrstrahlig ausgebildet ist. Mehrstrahlig kann in diesem Zusammenhang insbesondere bedeuten, dass der Abstandssensor ausgebildet ist, die Entfernung zu mehreren Punkten in der Umgebung von derselben Roboterposition aus zu messen. Die Messung der Entfernung zu den mehreren Punkten in der Umgebung kann insbesondere gleichzeitig aber auch nacheinander erfolgen, insbesondere aber ohne eine Veränderung der Position und der Pose des Umgebungssensors. Allgemein kann der Umgebungssensor nach dem Signal-Laufzeit-Prinzip arbeiten. Der Umgebungssensor kann insbesondere eine oder mehrere der folgenden Technologien verwenden:
- SPADs (Single Photon Avalanche Dioden)
- Lidar (Light Detection and Ranging)
- TOF Kameras (Time-of-Flight Kameras)
- RADAR (Radio Detection and Ranging)
- FMCW-Lidar (Frequency Modulated Continuous Wave Lidar)
- Ultraschall.

Bei dem Umgebungssensor kann es sich dementsprechend z.B. um eine 3D-Kamera, einen Laserscanner oder einen Lidar-Sensor handeln. Die Distanz zu Punkten in der Umgebung, d.h. zu Objekten in der Umgebung, kann beispielsweise über eine Lichtlaufzeitmessung, aber auch über andere Verfahren, beispielsweise Radar, erfolgen. Die Ermittlung des Abstandes bzw. der Distanz zu den Objekten in der Umgebung kann bevorzugt wiederholt und/oder zyklisch erfolgen. Die Abstandsmessungen, welche von dem realen Umgebungssensor durchgeführt werden, werden dann ebenfalls in dem Umgebungsmodell durchgeführt, wobei die jeweils ermittelten realen und simulierten Messergebnisse miteinander verglichen werden.

Der Umgebungssensor kann auch mehrere einzelne Sensoren umfassen. Die einzelnen Sensoren können unterschiedlich aber auch jeweils gleichartig oder identisch ausgebildet sein.

Der Umgebungssensor ist vorzugsweise eine TOF-Kamera oder ein berührungslos messender Distanzsensor, der längs mindestens eines Sichtstrahls einen Abstandswert misst, insbesondere ein optoelektronischer Sensor, der für eine Messung von Abständen mit einem Lichtlaufzeitverfahren ausgebildet ist. Solche Distanzsensoren können kostengünstig, leicht und kompakt gebaut werden und sind in der Lage, sicherheitsrelevante Eingriffe verlässlich zu erkennen. Vorzugsweise werden Abstandswerte für eine Vielzahl von Sichtstrahlen gemessen, wobei mehrere Sichtstrahlen von demselben Distanzsensor ausgehen oder jeweils ein Sichtstrahl von einem von mehreren Distanzsensoren ausgeht oder ein- und mehrstrahlige Distanzsensoren gemischt verwendet werden. Eine TOF-Kamera (Time of Flight, 3D-Kamera mit Messung der Lichtlaufzeit in ihren Pixeln) spannt Sichtstrahlen mit jedem Pixel auf, wobei Pixel zusammengefasst oder ausgewählt werden können, um bestimmte Sichtstrahlen zu ergeben.

Der Distanzsensor ist bevorzugt ein sicherer Sensor und/oder die Funktionsfähigkeit des Distanzsensors wird zyklisch überprüft und/oder die Abstandswerte mehrerer Distanzsensoren zur Erzeugung sicherer Abstandswerte werden untereinander verglichen. Damit sind neben der Validierung über Simulationen einige weitere Maßnahmen zum Erreichen eines sicheren Sensors ergriffen. Insbesondere kann so ein noch höheres Sicherheitsniveau erreicht werden. Wie schon einleitend erwähnt, sind Begriffe wie "sicher" oder "Sicherheitssensor" im Sinne dieser Beschreibung immer so zu verstehen, dass eine Sicherheitsnorm für Anwendungen der Sicherheitstechnik oder zur Unfallvermeidung im industriellen Bereich, insbesondere für Maschinensicherheit, berührungslos wirkende Schutzeinrichtungen, Industrieroboter, Kollaboration mit Robotern oder dergleichen erfüllt ist.

Als Umgebungssensor(en) sind aber auch andere Technologien, etwa Ultraschallsensoren, kapazitive Sensoren, Radarsensoren oder dergleichen möglich.

Gemäß einer weiteren Ausführungsform ist der Roboter ein feststehender Knickarmroboter und/oder ein feststehender Mehrgelenkroboter. Gemäß einer alternativen Ausführungsform ist der Roboter ein mobiles selbstfahrendes Fahrzeug (AGV - Autonomous Guided Vehicle). Weitere Bespiele sind ein autonomer mobiler Roboter (AMR - Autonomous Mobile Robot) oder ein Automated Guided Cart (AGC). Insbesondere ist der Umgebungssensor am Roboter montiert, bevorzugt an einem Endeffektor des Roboters, wie oben schon angedeutet. Der Endeffektor ist das letzte Element der kinematischen Kette des Roboters, bei einem Knickarmroboter also das äußerste Element am Knickarm. Bei dem Endeffektor kann es sich beispielsweise um eine Einheit zum Schweißen, Bohren oder Greifen handeln. Alternativ kann der Umgebungssensor auch an einem mit dem Endeffektor direkt verbundenen Teil des Roboters befestigt sein. Die Befestigung des Umgebungssensors am Endeffektor kann insbesondere deshalb sinnvoll sein, da der Endeffektor die schnellsten und ausladendsten Bewegungen vollführt, wodurch vom Endeffektor der Umgebungssensor in verschiedene Posen bewegt werden kann.

Auf diese Weise kann der Umgebungssensor dann verschiedene Bereiche der Umgebung erfassen und gegebenenfalls Unterschiede zwischen der realen Umgebung und der im Umgebungsmodell abgespeicherten Umgebung feststellen. Gemäß einer weiteren Ausführungsform werden als Unterschiede Differenzen von Abstandswerten in den realen und simulierten Messwerten erkannt und visualisiert. Wenn also die Differenz des gemessenen Abstandswerts und der im Umgebungsmodell ermittelte Abstandswert z.B. größer als ein vorbestimmter Schwellenwert ist, dann gilt ein Unterschied als erkannt und wird für den Benutzer visualisiert. Anstelle von Abstandswerten können z.B. auch erwartete Helligkeitswerte, Remissionswerte, der Grad der Streuung oder auch andere durch den Umgebungssensor erfassbare Messwerte als Unterschiede erkannt und/oder visualisiert werden.

Erfindungsgemäß werden die erkannten Unterschiede und die erkannten Übereinstimmungen jeweils für einen Oberflächenbereich angezeigt, wobei bei den erkannten Übereinstimmungen der Ort der Übereinstimmung markiert und angezeigt wird. Dies bedeutet, ein erkannter Unterschied wird jeweils für einen zusammenhängenden Oberflächenbereich angezeigt. Dies kann insbesondere der Fall sein, wenn z.B. nur ein Messpunkt innerhalb des Oberflächenbereichs erfasst wird, dann kann trotzdem eine Visualisierung eines Oberflächenbereichs als abweichend erfolgen, insbesondere wenn für den gesamten Oberflächenbereich z.B. derselbe Abstand zu dem Roboter oder dem Umgebungssensor erwartet wird. Dementsprechend können jeweils in dem Umgebungsmodell zusammenhängende ebene Flächenbereiche, beispielsweise bis zu deren jeweiligen Kanten immer gleichartig visualisiert werden. Ebenfalls ist es möglich, die Oberflächenbereiche in dem Umgebungsmodell in eine Vielzahl, insbesondere gleichartiger, Bereiche aufzuteilen, wobei jeweils ein gesamter eines gleichartigen Bereichs als abweichend visualisiert wird. Die gleichartigen Bereiche können beispielsweise eine Polygonform aufweisen.

Gemäß einer weiteren Ausführungsform werden verschieden große Unterschiede durch unterschiedliche Farben und/oder Texturen dargestellt. Kleinere Unterschiede können beispielsweise grün oder gelb, größere Unterschiede in rot dargestellt werden. Ebenfalls können Unterschiede durch hellere oder dunklere Farben, eine andere Textur, beispielsweise unterschiedliche Schraffuren, blinkend oder auf andere Weise ersichtlich gemacht werden. Bei der Verwendung unterschiedlicher Farben kann beispielsweise eine Farbskala definiert werden, welche jeweils ab vorgegebenen Schwellenwerten eine andere Farbe zur Visualisierung definiert.

Neben Unterschieden, welche bei dem Vergleichen erkannt werden, werden auch bei dem Vergleichen erkannte Übereinstimmungen mittels der Anzeigeeinrichtung für den Benutzer visualisiert. Insbesondere indem der Ort der Übereinstimmung bzw. der Übereinstimmungen angezeigt wird. Erfindungsgemäß werden Bereiche, in welchen das Umgebungsmodell mit den realen Messwerten des Umgebungssensors übereinstimmt, entsprechend markiert z.B. mit grüner Farbe.

Gemäß einer weiteren Ausführungsform umfasst das Umgebungsmodell einen digitalen Zwilling des Roboters, insbesondere des Roboters und der realen Umgebung. Der digitale Zwilling ist eine digitale Repräsentanz des Roboters und/oder der Umgebung. Insbesondere kann der digitale Zwilling ausgebildet sein, Anweisungen einer Steuereinheit des Roboters oder ein Ablaufprogramm für den Roboter auszuführen und in simulierte Bewegungen des Roboters umzusetzen. Der digitale Zwilling kann insbesondere die simulierten Messwerte ausgeben. Dazu kann der digitale Zwilling auch den Umgebungssensor umfassen.

Gemäß einer weiteren Ausführungsform wird auf einen visualisierten Unterschied hin ein Ablaufprogramm des Roboters abgeändert, bevorzugt durch den Benutzer. Ein visualisierter Unterschied kann beispielsweise auf eine Kollisionsgefahr hinweisen, so dass dann die Bewegung des Roboters geändert werden sollte. Der Benutzer kann dann die Möglichkeit bekommen, den Roboter zu stoppen und/oder das Ablaufprogramm zu ändern. Hierzu kann beispielsweise eine Eingabemöglichkeit an der Anzeigeeinrichtung vorgesehen sein. Neben einer Änderung des Ablaufprogramms durch den Benutzer kann auch eine automatische Veränderung des Ablaufprogramms vorgesehen sein. Alternativ oder zusätzlich kann bei einem erkannten und/oder visualisierten Unterschied auch eine Anpassung des Umgebungsmodells an die geänderte Realität erfolgen. Insbesondere kann bei einer Anpassung des Umgebungsmodells eine bessere Übereinstimmung des Umgebungsmodells mit der realen Umgebung erzielt werden.

Durch die realen Messwerte wird eine Validierung des Umgebungsmodells vorgenommen, wobei validierte Bereiche des Umgebungsmodells für den Benutzer mittels der Anzeigeeinrichtung markiert und angezeigt werden. Validierte Bereiche können insbesondere keine erkannten Unterschiede aufweisen, was durch einen zumindest einmaligen Vergleich der realen und der simulierten Messwerte für denjenigen Bereich überprüft wird. Durch die Anzeige der validierten Bereiche kann der Benutzer dann auf einfache Weise erkennen, wo beispielsweise das Umgebungsmodell korrekt ist und/oder dass z.B. keine Verschiebung zwischen dem Umgebungsmodell und der realen Umgebung vorliegt.

Umgekehrt ist es in einer nicht beanspruchten Ausführungsform vorgesehen, die korrekte Funktion des Umgebungssensors anhand des Umgebungsmodells zu validieren. Auch hier kann die Validierung für den Benutzer mittels der Anzeigeeinrichtung angezeigt werden. In dieser Ausführungsform wird davon ausgegangen, dass das Umgebungsmodell korrekt ist. Falls der Umgebungssensor inkorrekt arbeitet (z.B. wenn der Umgebungssensor dekalibriert ist), würden sich Abweichungen zwischen den realen und den simulierten Messwerten ergeben.

Weiterer Gegenstand der Erfindung ist ein Robotersystem umfassend eine Anzeigeeinrichtung, einen Roboter sowie einen mit dem Roboter mitbewegten Umgebungssensor, welcher ausgebildet ist, die Umgebung des Roboters zu erfassen und während einer realen Bewegung des Roboters reale Messwerte zu erzeugen. Das Robotersystem umfasst ferner eine Recheneinrichtung, welche ausgebildet ist, ein Umgebungsmodell anzulegen, welches auf der realen Umgebung des Roboters basiert, wobei die Recheneinrichtung ausgebildet ist, die realen Bewegungen des Roboters in dem Umgebungsmodell zu simulieren, um simulierte Messwerte, d.h. erwartete Messwerte, des Umgebungssensors in dem Umgebungsmodell zu erzeugen. Schließlich ist die Recheneinrichtung ausgebildet, reale Messwerte des Umgebungssensors mit den simulierten Messwerten zu vergleichen. Die Anzeigeeinrichtung ist ausgebildet, bei dem Vergleichen erkannte Unterschiede für einen Benutzer zu visualisieren, indem der Ort des Unterschieds angezeigt wird, wobei die erkannten Unterschiede jeweils für einen Oberflächenbereich angezeigt werden. Die Anzeigeeinrichtung ist ferner ausgebildet, bei dem Vergleichen erkannte Übereinstimmungen für den Benutzer zu visualisieren, indem der Ort der Übereinstimmung markiert und angezeigt wird, wobei die erkannten Übereinstimmungen jeweils für einen Oberflächenbereich angezeigt werden und wobei auf eine erkannte Übereinstimmung hin das Umgebungsmodell bereichsweise als verifiziert bzw. validiert angesehen werden kann.

Die Recheneinrichtung kann auch in der Anzeigeeinrichtung integriert sein und insbesondere eine Recheneinrichtung der Anzeigeeinrichtung sein.

Im Übrigen gelten die zu dem erfindungsgemäßen Verfahren getroffenen Aussagen für das erfindungsgemäße Robotersystem entsprechend. Dies gilt insbesondere hinsichtlich Vorteilen und Ausführungsformen. Weiterhin versteht es sich, dass sämtliche hierin genannten Merkmale miteinander kombinierbar sind, sofern nicht explizit etwas Gegenteiliges angegeben ist.

Im Folgenden wird die Erfindung rein beispielhaft unter Bezugnahme auf die Zeichnungen beschrieben. Es zeigen:
- Fig. 1: ein Robotersystem umfassend eine Anzeigeeinrichtung sowie einen Roboter mit einem mitbewegten Umgebungssensor;
- Fig. 2: schematisch einen Vergleich zwischen realen Messwerten und simulierten Messwerten;
- Fig. 3: ein Ablaufdiagramm für den Vergleich von realen und simulierten Messwerten; und
- Fig. 4: eine Visualisierung von Übereinstimmungen und Unterschieden für einen Benutzer.

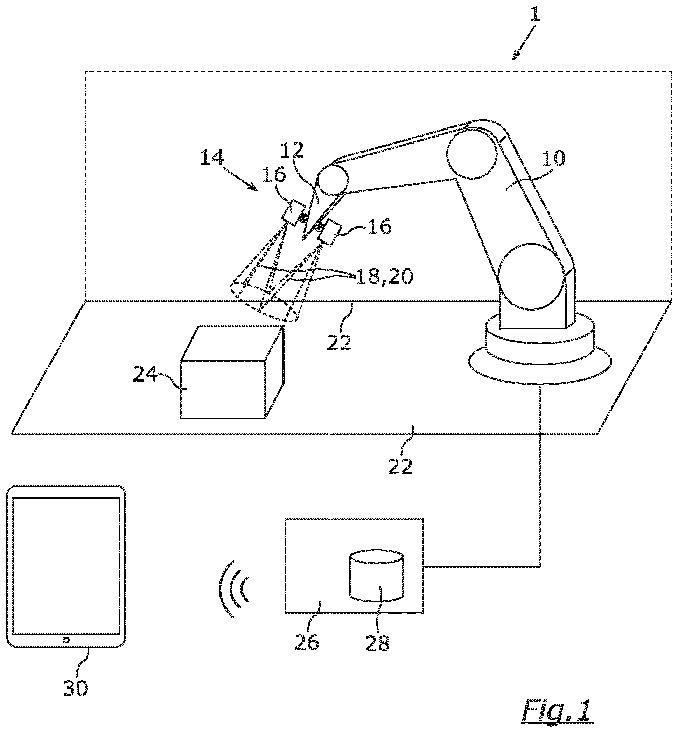

Fig. 1 zeigt ein Robotersystem 1 mit einem Gelenkarmroboter 10. An einem Endeffektor 12 des Roboters 10 ist ein Umgebungssensor 14 angebracht, welcher mehrere ringförmig um den Endeffektor 12 angeordnete Lichtlaufzeit messende Distanzsensoren 16 umfasst. Der Umgebungssensor 14 überwacht einen Überwachungsbereich 18, wobei der Überwachungsbereich 18 durch mehrere Sendelichtstrahlen 20 aufgespannt wird. Die Sendelichtstrahlen werden in eine Umgebung 22 des Roboters 10 ausgesandt und treffen dort auf Objekte 24, beispielsweise zu bearbeitende Werkstücke oder eine Wand oder einen Boden. Von den Objekten 24 remittierte Sendelichtstrahlen gelangen als Empfangslichtstrahlen (nicht gezeigt) zurück zum Umgebungssensor 14 und gestatten dem Umgebungssensor 14 eine Distanz zu dem jeweiligen Objekt 24 zu ermitteln. Neben der Distanz ist es auch möglich, dass der Umgebungssensor 14 z.B. eine Helligkeit, den Grad der Remission oder eine Streuung an dem Objekt 24 feststellt.

Das Robotersystem 1 umfasst zudem eine Recheneinrichtung 26 in welcher ein Umgebungsmodell 28 in Form eines digitalen Zwillings des Roboters 10 und der Umgebung 22 angelegt wurde. Die Recheneinrichtung 26 führt eine Simulation der realen Bewegungen des Roboters 10 in dem Bewegungsmodell 28 durch, um simulierte Messwerte des im Umgebungsmodell 28 ebenfalls simulierten Umgebungssensors 14 zu erhalten. Zu diesem Zweck umfasst das Umgebungsmodell 28 auch sämtliche Objekte 24 in der Umgebung 22 des Roboters 10.

Die Recheneinrichtung 26 führt dann einen Vergleich zwischen den realen Messwerten des realen Umgebungssensors 14 und den simulierten Messwerten des simulierten Umgebungssensors 14 aus dem Umgebungsmodell 28 durch. Für jeden festgestellten Unterschied zwischen den realen und den simulierten Messwerten wird ein Ort des Unterschieds ermittelt. Ebenfalls wird für Übereinstimmungen zwischen den realen und simulierten Messwerten jeweils der Ort der Übereinstimmung bestimmt. Die Unterschiede und Übereinstimmungen werden dann mittels einer Anzeigeeinrichtung 30, in Fig. 1 als Tablet dargestellt, einem Benutzer visualisiert. Die Anzeigeeinrichtung 30 empfängt die Unterschiede und Übereinstimmungen per WLAN. Die Darstellung auf der Anzeigeeinrichtung 30 kann insbesondere als Augmented-Reality-Darstellung erfolgen, d.h. die Anzeigeeinrichtung 30 nimmt kontinuierlich Bilder des Roboters 10 und der Umgebung 22 auf, stellt diese Bilder dar und blendet die Unterschiede und Übereinstimmungen beispielsweise als überlagerte Farbschicht in die Bilder ein.

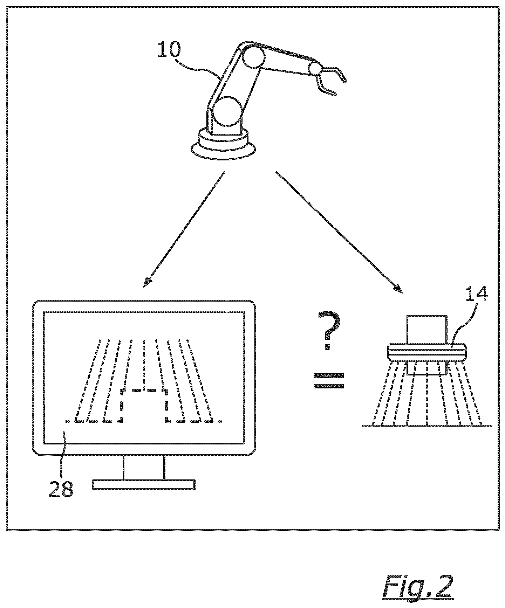

Fig. 2 zeigt nochmals schematisch die Feststellung von Unterschieden und Übereinstimmungen zwischen den simulierten Messwerten aus dem Umgebungsmodell 28 und den realen Messwerten des Umgebungssensors 14. In das Umgebungsmodell 28 wird die momentane Pose, d.h. die Stellung, des Roboters 10 eingegeben, so dass dann in dem Umgebungsmodell die erwarteten Messwerte simuliert werden können. Ergibt sich beispielsweise aus dem Umgebungsmodell 28, dass ein Objekt 24 in einem Abstand x zu dem Umgebungssensor 14 vorhanden sein müsste, so werden entsprechend simulierte Messwerte erzeugt. In der Realität nimmt der Roboter 10 dann ebenfalls dieselbe Pose ein und erzeugt mittels des realen Umgebungssensors 14 reale Messwerte. Befindet sich das Objekt 24 aber nicht mehr im Abstand x sondern z.B. in einem anderen Abstand y, welcher sich mehr als ein vorbestimmter Schwellenwert von dem Abstand x unterscheidet, so liegt ein Unterschied zwischen den realen und den simulierten Messwerten vor. Dieser Unterschied wird erkannt und mittels der Anzeigeeinrichtung 30 dargestellt, wobei auch dargestellt wird, an welcher Position, d.h. an welchem Ort in der Umgebung 22 des Roboters 10 der Unterschied festgestellt wurde.

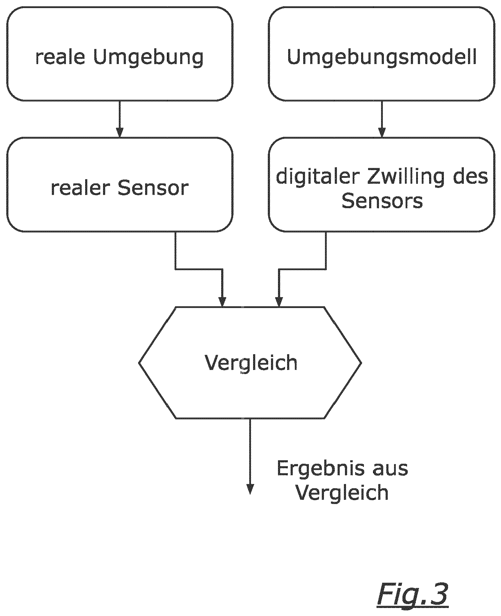

Fig. 3 zeigt dieses Vorgehen schematisch in Verfahrensschritten. Es wird, insbesondere zeitlich parallel in der realen Umgebung mit dem realen Umgebungssensor 14 und in dem Umgebungsmodell mit dem digitalen Zwilling des Umgebungssensors 14 jeweils zumindest ein Messwert erzeugt, wobei die realen und simulierten Messwerte dann miteinander verglichen werden. Das Ergebnis des Vergleichs kann dann visuell auf der Anzeigeeinrichtung 30 dargestellt werden.

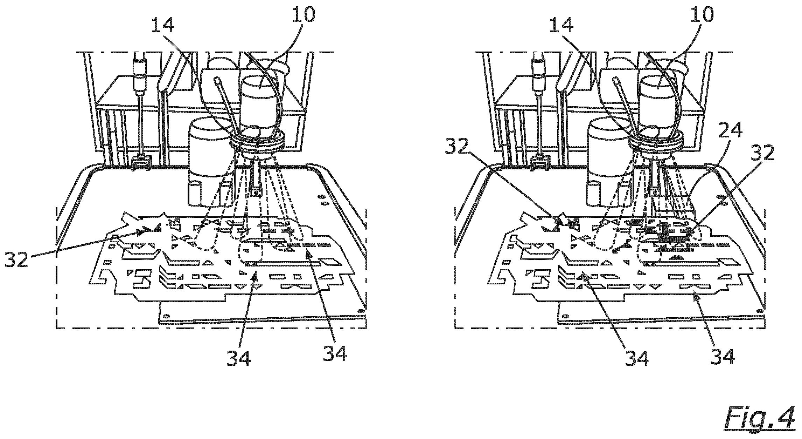

Eine solche Darstellung ist beispielsweise in Fig. 4 ersichtlich. In dem linken Bild von Fig. 4 ist lediglich ein kleiner Bereich mit beispielsweise rot oder einer dunklen Farbe überlagert, welcher einen Unterschied 32 anzeigt. Der Unterschied 32 im linken Bild von Fig. 4 kann beispielsweise durch eine stark reflektierende Fläche hervorgerufen sein, die dazu führt, dass der reale Umgebungssensor 14 keinen korrekten Messwert liefert.

Im rechten Bild von Fig. 4 ist ein zusätzliches Objekt 24, nämlich eine Kiste vorhanden, welche in dem Umgebungsmodell 28 nicht vorhanden ist. Die Kiste befindet sich zudem im Überwachungsbereich 18 des Umgebungssensors 14, wird also erfasst. Aufgrund der Kiste unterscheiden sich die realen und simulierten Messwerte, so dass im Bereich der Kiste ebenfalls wieder eine rote bzw. dunkle Farbe dem Bild überlagert wird, um Unterschiede 32 anzuzeigen. In anderen Bereichen des Bilds wird beispielsweise eine grüne oder hellere Farbe überlagert, um Übereinstimmungen 34 anzuzeigen.

Für den Benutzer ist es also sofort ersichtlich, an welcher Stelle und wodurch die Unterschiede zwischen dem Umgebungsmodell und der realen Umgebung 22 hervorgerufen werden. Dies verkürzt die Zeit zur Fehlersuche und gegebenenfalls zur Korrektur der Programmierung des Roboters 10.

### Bezugszeichenliste

- 1: Robotersystem
- 10: Roboter
- 12: Endeffektor
- 14: Umgebungssensor
- 16: Distanzsensor
- 18: Überwachungsbereich
- 20: Sendelichtstrahl
- 22: Umgebung
- 24: Objekt
- 26: Recheneinrichtung
- 28: Umgebungsmodell
- 30: Anzeigeeinrichtung
- 32: Unterschied
- 34: Übereinstimmung

## Patentansprüche

1. Verfahren zum Betreiben eines Roboters (10),
wobei der Roboter (10) mittels eines mit dem Roboter (10) mitbewegten Umgebungssensors (14) die Umgebung (22) erfasst,
wobei mittels des Umgebungssensors (14) während einer realen Bewegung des Roboters (10) reale Messwerte erzeugt werden,
wobei ein Umgebungsmodell (28) angelegt wird, welches auf der realen Umgebung (22) des Roboters (10) basiert,
wobei die realen Bewegungen des Roboters (10) in dem Umgebungsmodell (28) simuliert werden, um simulierte Messwerte des Umgebungssensors (14) in dem Umgebungsmodell (28) zu erzeugen,
wobei die realen Messwerte des Umgebungssensors (14) mit den simulierten Messwerten verglichen werden,
wobei bei dem Vergleichen erkannte Unterschiede (32) mittels einer Anzeigeeinrichtung (30) für einen Benutzer visualisiert werden, indem der Ort des Unterschieds (32) angezeigt wird,
wobei bei dem Vergleichen erkannte Übereinstimmungen (34) mittels der Anzeigeeinrichtung (30) für den Benutzer visualisiert werden, indem der Ort der Übereinstimmung (34) markiert und angezeigt wird,
wobei die erkannten Unterschiede (32) jeweils für einen Oberflächenbereich angezeigt werden,
wobei die erkannten Übereinstimmungen (34) jeweils für einen Oberflächenbereich angezeigt werden, und
wobei auf eine erkannte Übereinstimmung (34) hin das Umgebungsmodell (28) bereichsweise als verifiziert bzw. validiert angesehen werden kann.

2. Verfahren nach Anspruch 1,
wobei die Anzeigeeinrichtung (30) mobil ist und relativ zu dem Roboter (10) bewegbar ist, wobei die Anzeigeeinrichtung (30) insbesondere ein Smartphone und/oder ein Tablet umfasst.

3. Verfahren nach Anspruch 1 oder 2,
wobei die Anzeigeeinrichtung (30) eine Mixed-Reality-Anzeige oder Augmented-Reality-Anzeige ist, beispielsweise eine Augmented-Reality-Brille.

4. Verfahren nach einem der vorstehenden Ansprüche,
wobei mit einer von der Anzeigeeinrichtung (30) umfassten Kamera eine Positionsmarke erfasst wird, beispielsweise ein maschinenlesbarer Code, insbesondere ein QR-Code.

5. Verfahren nach einem der vorstehenden Ansprüche,
wobei der Umgebungssensor (14) ein Abstandssensor ist, welcher bevorzugt mehrstrahlig ausgebildet ist.

6. Verfahren nach einem der vorstehenden Ansprüche,
wobei der Roboter (10) ein feststehender Knickarmroboter und/oder ein feststehender Mehrgelenkroboter ist, oder wobei der Roboter (10) ein mobiles selbstfahrendes Fahrzeug ist.

7. Verfahren nach einem der vorstehenden Ansprüche,
wobei als Unterschiede (32) Differenzen von Abstandswerten in den realen und simulierten Messwerten erkannt und visualisiert werden.

8. Verfahren nach einem der vorstehenden Ansprüche,
wobei verschieden große Unterschiede (32) durch unterschiedliche Farben und/oder Texturen dargestellt werden.

9. Verfahren nach einem der vorstehenden Ansprüche,
wobei das Umgebungsmodell (28) einen digitalen Zwilling des Roboters (10), insbesondere des Roboters (10) und der realen Umgebung (22), umfasst.

10. Verfahren nach einem der vorstehenden Ansprüche, wobei auf einen visualisierten Unterschied (32) hin ein Ablaufprogramm des Roboters (10) abgeändert wird, bevorzugt durch den Benutzer.

11. Robotersystem (1) umfassend
- eine Anzeigeeinrichtung (30),
- einen Roboter (10),
- einen mit dem Roboter (10) mitbewegten Umgebungssensor (14), welcher ausgebildet ist, die Umgebung (22) zu erfassen und während einer realen Bewegung des Roboters (10) reale Messwerte zu erzeugen,
- eine Recheneinrichtung (26), welche ausgebildet ist, ein Umgebungsmodell (28) anzulegen, welches auf der realen Umgebung (22) des Roboters (10) basiert,
wobei die Recheneinrichtung (26) ausgebildet ist, die realen Bewegungen des Roboters (10) in dem Umgebungsmodell (28) zu simulieren, um simulierte Messwerte des Umgebungssensors (14) in dem Umgebungsmodell (28) zu erzeugen,
wobei die Recheneinrichtung (26) ausgebildet ist, reale Messwerte des Umgebungssensors (14) mit den simulierten Messwerten zu vergleichen, wobei die Anzeigeeinrichtung (30) ausgebildet ist, bei dem Vergleichen erkannte Unterschiede (32) für einen Benutzer zu visualisieren, indem der Ort des Unterschieds (32) angezeigt wird, wobei die erkannten Unterschiede (32) jeweils für einen Oberflächenbereich angezeigt werden,
wobei die Anzeigeeinrichtung (30) ausgebildet ist, bei dem Vergleichen erkannte Übereinstimmungen (34) für den Benutzer zu visualisieren, indem der Ort der Übereinstimmung (34) markiert und angezeigt wird, wobei die erkannten Übereinstimmungen (34) jeweils für einen Oberflächenbereich angezeigt werden, und
wobei auf eine erkannte Übereinstimmung (34) hin das Umgebungsmodell (28) bereichsweise als verifiziert bzw. validiert angesehen werden kann.

## Claims

1. Method for operating a robot (10),
wherein the robot (10) detects the environment (22) by means of an environment sensor (14) that is moved with the robot (10),
wherein real measurement values are generated by means of the environment sensor (14) during a real movement of the robot (10),
wherein an environment model (28) is created based on the real environment (22) of the robot (10),
wherein the real movements of the robot (10) are simulated in the environment model (28) to generate simulated measurement values of the environment sensor (14) in the environment model (28),
wherein the real measurement values of the environment sensor (14) are compared with the simulated measurement values,
wherein differences (32) identified in the comparison are visualized for a user by means of a display device (30) by displaying the location of the difference (32),
wherein matches (34) identified in the comparison are visualized for the user by means of the display device (30) by marking and displaying the location of the match (34),
wherein the identified differences (32) are displayed for a respective surface region,
wherein the identified matches (34) are displayed for a respective surface region, and
wherein, upon an identified match (34), the environment model (28) can be regarded as regionally verified or validated.

2. Method according to claim 1,
wherein the display device (30) is mobile and is movable relative to the robot (10), wherein the display device (30) comprises, in particular, a smartphone and/or a tablet.

3. Method according to claim 1 or 2,
wherein the display device (30) is a mixed-reality display or an augmented-reality display, for example augmented-reality glasses.

4. Method according to any one of the preceding claims,
wherein a position marker, for example a machine-readable code, in particular a QR code, is detected by a camera included in the display device (30).

5. Method according to any one of the preceding claims,
wherein the environment sensor (14) is a distance sensor, which is preferably configured as a multi-beam sensor.

6. Method according to any one of the preceding claims,
wherein the robot (10) is a stationary articulated-arm robot and/or a stationary multi-joint robot, or wherein the robot (10) is a mobile self-propelled vehicle.

7. Method according to any one of the preceding claims,
wherein deviations of distance values in the real and simulated measurement values are identified and visualized as differences (32).

8. Method according to any one of the preceding claims,
wherein differences (32) of varying magnitudes are represented by different colors and/or textures.

9. Method according to any one of the preceding claims,
wherein the environment model (28) comprises a digital twin of the robot (10), in particular of the robot (10) and the real environment (22).

10. Method according to any one of the preceding claims, wherein, upon a visualized difference (32), a sequence program of the robot (10) is modified, preferably by the user.

11. Robot system (1) comprising
- a display device (30),
- a robot (10),
- an environment sensor (14) that is moved with the robot (10) and is configured to detect the environment (22) and to generate real measurement values during a real movement of the robot (10),
- a computing device (26) configured to create an environment model (28) based on the real environment (22) of the robot (10),
wherein the computing device (26) is configured to simulate the real movements of the robot (10) in the environment model (28) in order to generate simulated measurement values of the environment sensor (14) in the environment model (28),
wherein the computing device (26) is configured to compare real measurement values from the environment sensor (14) with the simulated measurement values,
wherein the display device (30) is configured to visualize differences (32) identified in the comparison for a user by displaying the location of the difference (32), wherein the identified differences (32) are displayed for a respective surface region,
wherein the display device (30) is configured to visualize matches (34) identified in the comparison for the user by marking and displaying the location of the match (34), wherein the identified matches (34) are displayed for a respective surface region, and
wherein, upon an identified match (34), the environment model (28) can be regarded as regionally verified or validated.

## Revendications

1. Procédé de fonctionnement d'un robot (10),
dans lequel le robot (10) détecte l'environnement (22) au moyen d'un capteur d'environnement (14) se déplaçant avec le robot (10),
des valeurs de mesure réelles étant générées au moyen du capteur d'environnement (14) pendant un mouvement réel du robot (10),
un modèle d'environnement (28) étant créé qui est basé sur l'environnement réel (22) du robot (10),
les mouvements réels du robot (10) étant simulés dans le modèle d'environnement (28) afin de générer des valeurs de mesure simulées du capteur d'environnement (14) dans le modèle d'environnement (28),
les valeurs de mesure réelles du capteur d'environnement (14) étant comparées aux valeurs de mesure simulées,
des différences (32) identifiées lors de la comparaison étant visualisées pour un utilisateur au moyen d'un dispositif d'affichage (30) en affichant l'endroit de la différence (32),
les concordances (34) identifiées lors de la comparaison étant visualisées pour l'utilisateur au moyen du dispositif d'affichage (30) en marquant et en affichant l'endroit de la concordance (34),
les différences (32) identifiées étant affichées respectivement pour une zone de surface,
les concordances (34) identifiées étant affichées respectivement pour une zone de surface, et,
à la suite d'une concordance (34) identifiée, le modèle d'environnement (28) pouvant être considéré comme vérifié ou validé par zones.

2. Procédé selon la revendication 1,
le dispositif d'affichage (30) étant mobile et déplaçable par rapport au robot (10), le dispositif d'affichage (30) comprenant en particulier un smartphone et/ou une tablette.

3. Procédé selon la revendication 1 ou 2,
dans lequel le dispositif d'affichage (30) est un affichage en réalité mixte ou en réalité augmentée, par exemple des lunettes de réalité augmentée.

4. Procédé selon l'une des revendications précédentes,
dans lequel un repère de position est détecté à l'aide d'une caméra intégrée au dispositif d'affichage (30), par exemple un code lisible par machine, en particulier un code QR.

5. Procédé selon l'une des revendications précédentes,
dans lequel le capteur d'environnement (14) est un capteur de distance qui est de préférence configuré comme un capteur multifaisceaux.

6. Procédé selon l'une des revendications précédentes,
dans lequel le robot (10) est un robot à bras articulé fixe et/ou un robot à articulations multiples, ou dans lequel le robot (10) est un véhicule mobile automoteur.

7. Procédé selon l'une des revendications précédentes,
dans lequel des écarts entre les valeurs de distance dans les valeurs de mesure réelles et simulées sont détectées et visualisées en tant que différences (32) .

8. Procédé selon l'une des revendications précédentes,
dans lequel des différences (32) de grandeurs différentes sont représentées par des couleurs et/ou des textures différentes.

9. Procédé selon l'une des revendications précédentes,
dans lequel le modèle d'environnement (28) comprend un jumeau numérique du robot (10), en particulier du robot (10) et de l'environnement réel (22).

10. Procédé selon l'une des revendications précédentes, dans lequel, à la suite d'une différence visualisée (32), un programme de séquence du robot (10) est modifié, de préférence par l'utilisateur.

11. Système robotique (1) comprenant
- un dispositif d'affichage (30),
- un robot (10),
- un capteur d'environnement (14) se déplaçant avec le robot (10) qui est configuré pour détecter l'environnement (22) et pour générer des valeurs de mesure réelles pendant un mouvement réel du robot (10),
un dispositif de calcul (26) configuré pour créer un modèle d'environnement (28) basé sur l'environnement réel (22) du robot (10),
le dispositif de calcul (26) étant configuré pour simuler les mouvements réels du robot (10) dans le modèle d'environnement (28) afin de générer des valeurs de mesure simulées du capteur d'environnement (14) dans le modèle d'environnement (28),
le dispositif de calcul (26) étant configuré pour comparer les valeurs de mesure réelles du capteur d'environnement (14) avec les valeurs de mesure simulées,
le dispositif d'affichage (30) étant configuré pour visualiser des différences (32) identifiées lors de la comparaison pour un utilisateur en affichant l'endroit de la différence (32), les différences (32) identifiées étant affichées respectivement pour une zone de surface,
le dispositif d'affichage (30) étant configuré pour visualiser pour l'utilisateur les concordances (34) identifiées lors de la comparaison, en marquant et en affichant l'endroit de la concordance (34), les concordances (34) identifiées étant affichées respectivement pour une zone de surface, et,
à la suite d'une concordance (34) identifiée, le modèle d'environnement (28) pouvant être considéré comme vérifié ou validé par zones.
